**Europäisches Patentamt**

**European Patent Office**

**Office européen des brevets**

(19)

(11) Veröffentlichungsnummer : **0 011 797**
**B1**

(12) **EUROPÄISCHE PATENTSCHRIFT**

(45) Veröffentlichungstag der Patentschrift :
01.09.82

(51) Int. Cl.³ : **A 21 D  8/08**

(21) Anmeldenummer : **79104572.7**

(22) Anmeldetag : **19.11.79**

(54) **Backtrennöl-Komponente.**

(30) Priorität : 25.11.78 DE 2851104

(43) Veröffentlichungstag der Anmeldung :
11.06.80 (Patentblatt 80/12)

(45) Bekanntmachung des Hinweises auf die Patenterteilung : 01.09.82 Patentblatt 82/35

(84) Benannte Vertragsstaaten :
**BE CH DE FR GB IT NL SE**

(56) Entgegenhaltungen :
DE A 1 792 683
DE C 528 486
US A 2 963 372
US A 4 152 278
JOURNAL OF THE AMERICAN OIL CHEMISTS'
SOCIETY, Band 54, Nr. 6, Juni 1977 Champaign,
Illinois, USA E.W. BELL et al. « Sperm oil
replacements : Synthetic wax esters from
selectively hydrogenated soybean and linseed
oils », Seiten 259-253.
JOURNAL OF THE AMERICAN OIL CHEMISTS'
SOCIETY, Band 51, Nr. 8, August 1974
Champaign, Illinois, USA E. PERLSTEIN et al.
« Synthesis of sperm oil replacements », Seiten
335-339.

(73) Patentinhaber : **Henkel Kommanditgesellschaft auf**
**Aktien**
**Postfach 1100 Henkelstrasse 67**
**D-4000 Düsseldorf 1 (DE)**

(72) Erfinder : **Heine, Christian, Dr.**
**Habichtstrasse 4**
**D-4019 Monheim (DE)**
Erfinder : **Ploog, Uwe, Dr.**
**Haydenweg 6**
**D-5657 Haan (DE)**
Erfinder : **Wüst, Reinhold**
**Jahnstrasse 23**
**D-4044 Kaarst b. Neuss (DE)**

Imprimerie Jouve, 18, rue St-Denis, 75001 Paris, France

## Backtrennöl-Komponente

Die Reduzierung der Fangquoten für Wale führt zu einer zunehmenden Verknappung von Spermöl, das unter anderem ein wichtiger Bestandteil von Backtrennölen ist. Ziel der Erfindung ist daher die Entwicklung eines physiologisch und lebensmittelrechtlich unbedenklichen Backtrennöls, das auf Grund seiner physikalischen und technologischen Eigenschaften anstelle von natürlichem, angehärtetem Spermöl als Trennölen für Backwaren verwendet werden kann.

Gegenstand der Erfindung ist somit ein Backtrennöl, bestehend aus 20-60 Gewichtsprozent eines synthetischen Wachsesters aus

a) einem $C_{12}$-$C_{20}$-Fettsäuregemisch der Jodzahl 48-96 mit einem Anteil von wenigstens 90 % $C_{16}$-$C_{18}$-Fettsäuren, und

b) einem $C_{12}$-$C_{20}$-Fettalkoholgemisch der Jodzahl 50-95 mit einem Anteil von wenigstens 90 % $C_{16}$-$C_{18}$-Fettalkoholen, mit folgenden Kenndaten :

| | |
|---|---|
| Jodzahl | 40-110 |
| Verseifungszahl | 100-140 |
| Säurezahl | < 1 |
| OH-Zahl | < 5 |
| Erstarrungspunkt (°C) | 10-30 |

und 80-40 Gewichtsprozent eines bei Raumtemperatur flüssigen Triglycerids oder Triglyceridgemisches aus natürlichen Speisefettsäuren.

Ausgangsprodukte für die Herstellung des Wachsesters sind a) technische Oleinfraktionen, wie sie z.B. aus Talgfettsäuren, Palmöl oder angehärteten Pflanzenölen geeigneter Zusammensetzung durch Verseifung und ggf. Fraktionierung gewonnen werden. Die daraus gewonnenen Fettsäuregemische enthalten Fettsäuren der Kettenlänge $C_{12}$-$C_{20}$ mit einem Anteil von wenigstens 90 % Fettsäuren der Kettenlänge $C_{16}$-$C_{18}$ und einer Jodzahl von 48-96. Die Kettenlängenverteilung liegt etwa in folgendem Rahmen :

| Kettenlänge (%) | |
|---|---|
| $C_{12}$ | ca. 1 |
| $C_{14}$ | 2-4 |
| $C_{15}$ | ca. 1 |
| $C_{16}$ | 5-26 |
| $C_{16'}$ | 2-6 |
| $C_{17}$ | ca. 2 |
| $C_{18}$ | 2-17 |
| $C_{18'}$ | 44-70 |
| $C_{18''}$ | 3-10 |
| $C_{18'''}$ | ca. 1 |
| $C_{20'}$ | ca. 1 |

' = einfach ungesättigt.

" = zweifach ungesättigt.

"' = dreifach ungesättigt.

Der Gehalt an Polyensäuren sollte möglichst niedrig sein und insgesamt 13 % nicht übersteigen.

Die Kenndaten des Fettsäuregemisches liegen in folgendem Bereich :

| | |
|---|---|
| Jodzahl | 48-96 |
| Verseifungszahl | 200-210 |
| Säurezahl | 198-210 |
| Unverseifbares | ca. 1 |
| Erstarrungspunkt (°C) | 4-45 °C |

Als zweite Ausgangskomponente (b) kommen Fettalkoholgemische in Frage, wie sie durch Reduktion, insbesondere Hydrierung von Fettsäuregemischen auf Basis tierischer Fette erhalten werden. Diese Fettalkoholgemische enthalten Fettalkohole der Kettenlänge $C_{12}$-$C_{20}$ mit einem Anteil von wenigstens 90 % Fettalkoholen der Kettenlängen $C_{16}$-$C_{18}$ und einer Jodzahl von 50-95. Die Kettenlängenverteilung liegt etwa in folgendem Rahmen :

| Kettenlänge (%) | |
|---|---|
| $C_{12}$ | $\leqslant 1$ |
| $C_{14}/C_{14'}$ | 0,3-3,6 |
| $C_{15}$ | $\leqslant 0,5$ |

| | |
|---|---|
| $C_{16}$ | 2,5-24,8 |
| $C_{16'}$ | 1,4- 3,8 |
| $C_{17}/C_{17'}$ | $\leq 2,3$ |
| $C_{18}$ | 2,1-17,5 |
| $C_{18'}$ | 40,8-80,9 |
| $C_{18''}$ | 0,7- 2,7 |
| $C_{18'''}$ | 1 - 2,5 |
| $C_{20}/C_{20'}$ | 2,2 |

$'$ = einfach ungesättigt.
$''$ = zweifach ungesättigt.
$'''$ = dreifach ungesättigt.

Geringe Anteile an Kettenlängen unter $C_{12}$ und über $C_{20}$ können vorhanden sein, sollten aber möglichst gering gehalten werden, da einerseits durch einen zu hohen Anteil an Alkoholen $< C_{12}$ die Trennwirkung leidet, andererseits durch zu lange Fettsäuren die Löslichkeit des Esters in Triglyceriden herabgesetzt wird.

Die Kenndaten der Fettalkoholgemische liegen etwa in folgendem Bereich :

| | |
|---|---|
| Jodzahl | 50-95 |
| Verseifungszahl | $< 1$ |
| Säurezahl | $< 0,2$ |
| OH-Zahl | 205-220 |
| Erstarrungspunkt (°C) | 3-34 °C |

Die Herstellung der Wachsester erfolgt in an sich bekannter Weise durch Veresterung molarer Mengen der entsprechenden Fettsäure-Komponente (a) mit der entsprechenden Fettalkohol-Komponente (b), z.B. in Gegenwart von Veresterungskatalysatoren, wie Isopropyltitanat. Der Wachsester kann im Anschluß an die Veresterung durch Vakuumdestillation von nicht veresterten Anteilen befreit und danach in üblicher Weise entsäuert, gebleicht und desodoriert werden, um ein völlig geschmacksneutrales Produkt zu erhalten.

Durch geeignete Auswahl der für die Veresterung verwendeten Ausgangskomponenten (a) und (b) wird erreicht, daß die Wachsester folgende Kenndaten aufweisen :

| | |
|---|---|
| Jodzahl | 40-110, vorzugsweise ca. 70 |
| Verseifungszahl | 100-140, vorzugsweise ca. 110 |
| Säurezahl | $< 1$ |
| OH-Zahl | $< 5$ |
| Erstarrungspunkt (°C) | 10-30 |

Derartige Wachsester weisen für die vorgesehene Verwendung als Spermöl-Austauschprodukt für Backtrennöle besondere Vorteile auf. So besitzen sie durch Einstellung auf eine relativ niedrige Jodzahl von ca. 70 und geringen Gehalt an Fettsäuren bzw. Fettalkoholen mit mehreren Doppelbindungen eine erhöhte Oxidationsstabilität. Ferner läßt sich der Erstarrungspunkt der jahreszeitlichen Temperatur ohne weiteres anpassen. Die Einhaltung einer einheitlichen Qualität und das Ausnutzen preisgünstiger und ausreichend vorhandener Rohstoffe sind weitere Vorteile gegenüber dem Spermöl.

Die Ausgangsstoffe, sowie die Wachsester selbst, müssen die für eine Verwendung in Nahrungsmitteln erforderliche Reinheit aufweisen.

Das Backtrennöl enthält die vorgenannten Wachsester im Gewichtsverhältnis 20 : 80-60 : 40 im Gemisch mit bei Raumtemperatur flüssigen Triglyceriden aus natürlichen Speisefettsäuren, die einen möglichst geringen Gehalt an Polyensäuren aufweisen. Als solche kommen insbesondere flüssige Palmölfraktionen sowie Triglyceride mittelkettiger Fettsäuren in Betracht.

Eine geeignete Palmölfraktion besitzt z.B. folgende Kenndaten :

| | |
|---|---|
| Jodzahl | 58-62 |
| Verseifungszahl | 195-202 |
| Säurezahl | $\leq 0,2$ |
| Tropfpunkt (°C) | 20-22 |
| Dilatation bei 20 °C | ca. 5 % Festanteile |

| Fettsäure-Zusammensetzung (%) | |
|---|---|
| $C_{14}$ | 1- 1,5 |
| $C_{16}$ | 34-38 |
| $C_{16'}$ | $\leq 0,5$ |
| $C_{18}$ | 4- 5 |
| $C_{18'}$ | 39-43 |

3

| | |
|---|---|
| $C_{18''}$ | 12-15 |
| $C_{20}$ | $\leqslant 1$ |

In gleicher Weise sind auch andere flüssige Triglyceride mit niedrigem Gehalt an Polyenfettsäuren, deren Stockpunkte bzw. Tropfpunkte zwischen etwa −18 und +24 °C liegen, geeignet. Beispiele hierfür sind Ölsäure-Triglycerid oder Klauenöl.

Ein geeignetes mittelkettiges Triglycerid enthält im wesentlichen Fettsäuren der Kettenlängen $C_8$-$C_{10}$ und weist folgende Kenndaten auf :

| | |
|---|---|
| Erstarrungspunkt (°C) | −16 |
| Verseifungszahl | 338 |
| Säurezahl | $\leqslant 0,2$ |
| Jodzahl | $\leqslant 0,2$ |
| Viskosität (20 °C) | $29,4 \cdot 10^{-6}$ m²/s |

| Fettsäure-Zusammensetzung (%) | |
|---|---|
| $C_6$ | 0,5 |
| $C_8$ | 1,1 |
| $C_{10}$ | ∠9,5 |
| $C_{12}$ | 1,0 |

Vorzugsweise besteht das Backtrennöl aus 20-30 Gew.-% eines Wachsesters gemäß der Erfindung, 20-30 Gew.-% einer flüssigen Palmölfraktion bzw. eines entsprechenden flüssigen Triglycerids und 60-40 Gew.-% eines mittelkettigen Triglycerids.

Als weitere Komponente können dem Backtrennöl bis zu 5 Gew.-% an Phosphatiden, wie Lecithin, als Emulgatoren zugesetzt werden.

Die Kenndaten wurden nach folgenden Methoden bestimmt :

| | |
|---|---|
| Säurezahl | DGF C- V 25(81) |
| Verseifungszahl | DGF C- V 35(77) |
| Jodzahl | DGF C- V 11c (53) |
| Hydroxylzahl | DGF C- V 17a (53) |
| Dilatation | DGF C-IV 3e (57) |
| Tropfpunkt | DGF C-IV 3b (57) |
| Erstarrungspunkt | |
| Trübungspunkt | |

nach Shukoff

Literatur : J. Marcusson « Die Untersuchung der Fette und Öle », Verlag Kapp, Halle 1952, S. 33

## Beispiele

### Beispiel 1

In einem 2 1-Dreihalskolben, versehen mit Rührer, Thermometer und Destillationsaufsatz, werden im Stickstoffstrom 522 g Oleyl-Cetylalkohol (OHZ 215, JZ 85) sowie 544 g tierische Fettsäure (SZ 205, JZ 54) bei ca. 100 °C unter Rühren entwässert, Dauer ca. 30 Min. Danach gibt man ca. 1 g einer 28 %igen Isopropyltitanat-Lösung hinzu und erhitzt langsam auf 140-200 °C, Dauer ca. 10 Std. Überschüssiger Oleyl-Cetylalkohol wird bei 225 °C/2-3 Torr abdestilliert und das Produkt nach der Raffination mit 50 %iger Natronlauge durch Zusatz von 1 % Aktivkohle und 1 % säureaktivierter Tonerde durch ca. 30-minütiges Erhitzen auf 100 °C im Wasserstrahlvakuum gebleicht. Nach Filtration erhält man ca. 1 kg eines Wachsesters mit folgenden Kennzahlen :

| | |
|---|---|
| Säurezahl | 0,5 |
| Verseifungszahl | 108 |
| Jodzahl | 71,5 |
| Farbe (gemessen nach Lovibond in 5 1/4''-Küvette) | gelb 13, rot 2 |
| Konsistenz | bei Raumtemperatur flüssiges Öl, |
| Trübungspunkt | + 35° |
| Erstarrungspunkt | + 27° |

### Beispiel 2

Wie unter Beispiel 1 beschrieben, wird eine Mischung aus 522 g Oleyl-Cetylalkohol (OHZ 215, JZ 55) und 544 g techn. Ölsäure (SZ 200, JZ 92) verestert, raffiniert und gebleicht. Man erhält ca. 1 kg eines bei Raumtemperatur teilweise erstarrten, flüssigen Wachsesters mit folgenden Kennzahlen :

| | |
|---|---|
| Säurezahl | 0,12 |
| Verseifungszahl | 106 |
| Jodzahl | 76,3 |
| Farbe (gemessen nach Lovibond in 5 1/4″-Küvette) | gelb 15, rot 2,1 |
| Trübungspunkt | + 16 °C |
| Erstarrungspunkt | + 13 °C |

Beispiel 3

Ein Trennöl mit hervorragender Trennwirkung hat folgende Zusammensetzung ;

| | |
|---|---|
| Wachsester gemäß Beispiel 2 | 24 Gew.-% |
| Palmölfraktion flüssig | 24 Gew.-% |
| Mittelkettiges Triglyzerid ($C_8 : C_{10} = 70 : 30$) | 48 Gew.-% |
| Soja-Lecithin | 4 Gew.-% |

**Ansprüche**

1. Backtrennöl, bestehend aus 20-60 Gewichtsprozent eines synthetischen Wachsesters aus
   a) einem $C_{12}$-$C_{20}$-Fettsäuregemisch der Jodzahl 48-96 mit einem Anteil von wenigstens 90 % $C_{16}$-$C_{18}$-Fettsäuren, und
   b) einem $C_{12}$-$C_{20}$-Fettalkoholgemisch der Jodzahl 50-95 mit einem Anteil von wenigstens 90 % $C_{16}$-$C_{18}$-Fettalkoholen, mit folgenden Kenndaten :

| | |
|---|---|
| Jodzahl | 40-110 |
| Verseifungszahl | 100-140 |
| Säurezahl | < 1 |
| OH-Zahl | < 5 |
| Erstarrungspunkt (°C) | 10-30 |

und 80-40 Gewichtsprozent eines bei Raumtemperatur flüssigen Triglycerids oder Triglyceridgemisches aus natürlichen Speisefettsäuren.

2. Backtrennöl nach Anspruch 1, enthaltend eine flüssige Palmölfraktion mit folgenden Kenndaten :

| | |
|---|---|
| Tropfpunkt (°C) | 20-22 |
| Dilatation (20 °C) | ca. 5 % Festanteile |
| Verseifungszahl | 195-202 |
| Säurezahl | ⩽ 0,2 |
| Jodzahl | 58- 62 |

Fettsäure-Zusammensetzung (%)

| | |
|---|---|
| $C_{14}$ | 1- 1,5 |
| $C_{16}$ | 34-38 |
| $C_{16'}$ | ⩽ 0,5 |
| $C_{18}$ | 4-5 |
| $C_{18'}$ | 39-43 |
| $C_{18''}$ | 12-15 |
| $C_{20}$ | ⩽ 1 |

3. Backtrennöl nach Anspruch 1, enthaltend ein mittelkettiges Triglycerid aus $C_8$-$C_{10}$-Fettsäuren mit folgenden Kenndaten :

| | |
|---|---|
| Erstarrungspunkt (°C) | −16 |
| Verseifungszahl | 338 |
| Säurezahl | ⩽ 0,2 |
| Jodzahl | ⩽ 0,2 |
| Viskosität (20 °C) | $29,4 . 10^{-6}$ m²/s |

Fettsäure-Zusammensetzung (%)

| | |
|---|---|
| $C_6$ | 0,5 |
| $C_8$ | 61,1 |
| $C_{10}$ | 29,5 |
| $C_{12}$ | 1,0 |

4. Backtrennöl, bestehend aus 20-30 Gewichtsprozent eines Wachsesters gemäß Anspruch 1, 20-30 Gewichtsprozent einer flüssigen Palmölfraktion gemäß Anspruch 2, 60-40 Gewichtsprozent eines mittelkettigen Triglycerids gemäß Anspruch 3.

5. Backtrennöl gemäß Anspruch 4 mit einem zusätzlichen Gehalt an 3-5 Gewichtsprozent Lecithin.

**Claims**

1. A baking release oil consisting of from 20 tc 60 % by weight of a synthetic wax ester of

a) a $C_{12}$-$C_{20}$-fatty acid mixture having an iodine number of from 48 to 96 and containing at least 90 % of $C_{16}$-$C_{18}$-fatty acids and

b) a $C_{12}$-$C_{20}$-fatty alcohol mixture having an iodine number of from 50 to 95 and containing at least 90 % of $C_{16}$-$C_{18}$-fatty alcohols, with the following characteristics :

| | |
|---|---|
| iodine number | 40-110 |
| saponification number | 100-140 |
| acid number | $< 1$ |
| OH-number | $< 5$ |
| setting point (°C) | 10- 30 |

and from 80 to 40 % by weight of a triglyceride or triglyceride mixture — liquid at room temperature — of natural edible fatty acids.

2. A baking release oil as claimed in Claim 1 containing a liquid palm oil fraction having the following characteristics :

| | |
|---|---|
| dropping point (°C) | 20- 22 |
| dilatation (20 °C) | approx. 5 % solids |
| saponification number | 195-202 |
| acid number | $\leqslant$ 0.2 |
| iodine number | 58- 62 |

fatty acid composition (%)

| | |
|---|---|
| $C_{14}$ | 1- 1.5 |
| $C_{16}$ | 34-38 |
| $C_{16'}$ | $\leqslant$ 0.5 |
| $C_{18}$ | 4- 5 |
| $C_{18'}$ | 39-43 |
| $C_{18''}$ | 12-15 |
| $C_{20}$ | $\leqslant$ 1 |

3. A baking release oil as claimed in Claim 1 containing a medium-chain triglyceride of $C_8$-$C_{10}$-fatty acids having the following characteristics :

| | |
|---|---|
| setting point (°C) | −16 |
| saponification number | 338 |
| acid number | $\leqslant$ 0.2 |
| iodine number | $\leqslant$ 0.2 |
| viscosity (20 °C) | 29.4 centistokes |
| | (officially amended from m Pas on 25.9.81) |

fatty acid composition (%)

| | |
|---|---|
| $C_6$ | 0.5 |
| $C_8$ | 61.1 |
| $C_{10}$ | 29.5 |
| $C_{12}$ | 1.0 |

4. A baking release oil consisting of from 20 to 30 % by weight of a wax ester as.claimed in Claim 1, 20 to 30 % by weight of a liquid palm oil fraction as claimed in Claim 2 and 60 to 40 % by weight of a medium-

6

chain triglyceride as claimed in Claim 3.

5. A baking release oil as claimed in Claim 4 with an additional content of from 3 to 5 % by weight of lecithin.

**Revendications**

1. Huile empêchant l'adhérence à la cuisson, consistant en 20-60 % en poids d'un ester cireux synthétique en :

a) un mélange d'acides gras en $C_{12}$-$C_{20}$ d'indice d'iode 48-96 ayant une proportion d'au moins 90 % d'acides gras en $C_{16}$-$C_{18'}$ et en

b) un mélange d'alcools gras en $C_{12}$-$C_{20}$ d'indice d'iode 50-95 ayant une proportion d'au moins 90 % d'alcools gras en $C_{16}$-$C_{18'}$

qui présente les caractéristiques suivantes :

| | |
|---|---|
| indice d'iode | 40-110 |
| indice de saponification | 100-140 |
| indice d'acide | < 1 |
| indice OH | < 5 |
| point de solidification (°C) | 10-30 |

et en 80-40 % en poids d'un triglycéride ou mélange de triglycérides, liquide à la température ordinaire, à partir d'acides gras comestibles naturels.

2. Huile empêchant l'adhérence à la cuisson selon la revendication 1, contenant une fraction d'huile de palme ayant les caractéristiques suivantes :

| | |
|---|---|
| point de goutte (°C) | 20- 22 |
| dilatation (20 °C) | env. 5 % de constituants solides |
| indice de saponification | 195-202 |
| indice d'acide | ≤ 0,2 |
| indice d'iode | 58- 62 |

composition d'acides gras :

| | |
|---|---|
| $C_{14}$ | 1- 1,5 |
| $C_{16}$ | 34-38 |
| $C_{16'}$ | ≤ 0,5 |
| $C_{18}$ | 4- 5 |
| $C_{18'}$ | 39-43 |
| $C_{18''}$ | 12-15 |
| $C_{20}$ | ≤ 1 |

3. Huile empêchant l'adhérence à la cuisson selon la revendication 1, contenant un triglycéride à chaîne moyenne à partir d'acide gras en $C_8$-$C_{10}$ ayant les caractéristiques suivantes :

| | |
|---|---|
| point de solidification (°C) | −16 |
| indice de saponification | 338 |
| indice d'acide | ≤ 0,2 |
| indice d'iode | ≤ 0,2 |
| viscosité (20 °C) | 29,4 cSt |

composition des acides gras (%)

| | |
|---|---|
| $C_6$ | 0,5 |
| $C_8$ | 61,1 |
| $C_{10}$ | 29,5 |
| $C_{12}$ | 1,0 |

4. Huile empêchant l'adhérence à la cuisson, consistant en 20-30 % en poids d'un ester cireux selon la revendication 1, en 20-30 % en poids d'une fraction d'huile de palme liquide selon la revendication 2, en 60-40 % en poids d'un triglycéride à chaîne moyenne selon la revendication 3.

5. Huile empêchant l'adhérence à la cuisson selon la revendication 4, ayant une teneur supplémentaire de 3-5 % en poids de lécithine.